# EUROPEAN PATENT APPLICATION

(11) **EP 1 126 460 A2**
(43) Date of publication of application: **22.08.2001**
(21) Application number: 01301152.3
(22) Date of filing: 09.02.2001
(51) Int. Cl.: G11B 23/03

(54) **Disc cartridge**

(30) Priority: 14.02.2000 JP 2000039799
(71) Applicant: Sony Corporation, Tokyo 141-0001 (JP)
(72) Inventor: Kikuchi, Shuichi, Shinagawa-ku, Tokyo (JP); Izu, Rie, Shinagawa-ku, Tokyo (JP)
(74) Representative: Robinson, Nigel Alexander Julian

(57) **Abstract**

There are provided an optical disc 5, a cartridge body 6, a recording-reproducing opening 21, a shutter plate 25, and a shutter open/close mechanism 26. The cartridge body 6 has a disc container 16 for accommodating the optical disc 5 therein. The recording-reproducing opening 21 is provided on the cartridge body 6 for externally exposing part of a recording area of the optical disc 5 ranging from an inner periphery to an outer periphery. The shutter plate 25 is provided for opening and closing the recording-reproducing opening 21. The shutter open/close mechanism 26 has a guide groove 34 for movably supporting the shutter plate 25. The guide groove 34 is provided obliquely with reference to a width direction of the cartridge body 6 on the principal plane thereof.

## Description

The present invention relates to a disc cartridge which accommodates a disc-shaped storage medium such as an optical disc, a magneto-optical disc, or the like.

A disc cartridge accommodating, say, a magneto-optical disc is well known as a disc-shaped storage medium.

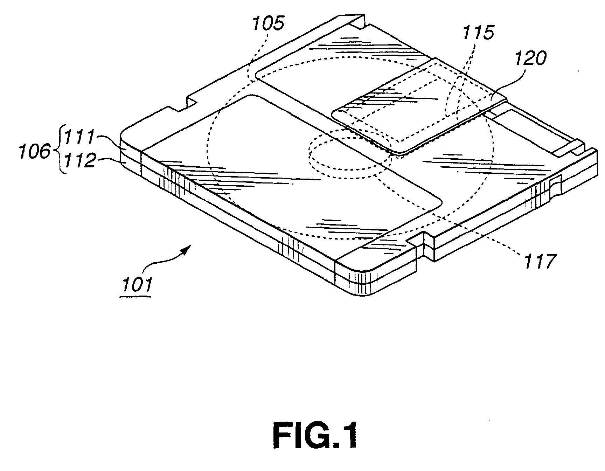

As shown in FIG. 1, for example, this type of disc cartridge 101 has a cartridge body 106 comprising a pair of an upper shell 111 and a lower shell 112 combined with each other. The upper shell 111 and the lower shell 112 are made of resin. In the cartridge body 106. there are formed approximately square recording-reproducing openings 115 at opposite positions for externally exposing part of a magneto-optical disc 105 ranging from an inner periphery to an outer periphery thereof.

A bottom side of the cartridge body 106 is provided with a drive opening 117 as part of or adjacent to the recording-reproducing opening 115. The drive opening 117 is used for letting a disc table (not shown) of a disc drive mechanism for rotatively driving the magneto-optical disc 105 enter the cartridge body 106.

As shown in FIG. 1, the cartridge body 106 is movably provided with a shutter member 120 which allows the recording-reproducing openings 115 and the drive opening 117 to open or close. The shutter member 120 comprises an upper shutter, a lower shutter, and a clamp unit. The upper shutter opens or closes the recording-reproducing opening 115 on the upper shell 111. The lower shutter opens or closes the recording-reproducing opening 115 and the drive opening 117 on the lower shell 112. The clamp unit clamps one end of the upper shutter and the lower shutter.

When the thus configured disc cartridge 101 is mounted on a recording-reproducing apparatus, a shutter open/close member on the recording-reproducing apparatus moves the shutter member 120 to release the recording-reproducing openings 115 and the drive opening 117. When the recording-reproducing apparatus is used, a disc table of its disc drive mechanism (not shown) enters the disc cartridge 101 through the drive opening 117 to rotatively drive the magneto-optical disc 105. Recording-reproducing means of the recording-reproducing apparatus also enters through the recording-reproducing openings 115 for recording and reproducing information on the magneto-optical disc 105.

The above-mentioned conventional disc cartridge 101 has a linear front edge orthogonal to an insertion direction ofthe disc cartridge into the recording-reproducing apparatus. In addition, an entire principal plane of the cartridge body 106 forms an approximate square. It is difficult to determine an insertion direction from an external view of the cartridge body 106.

Accordingly, the conventional disc cartridge 101 caused a problem of being inserted into the recording-reproducing apparatus in an incorrect direction.

It is therefore an object of at least preferred embodiments of the present invention to provide a disc cartridge which can easily identify an insertion direction against a recording and/or reproducing apparatus by forming a cartridge body's front end in any shape and comprise a new shutter open/close mechanism suited for a cartridge body whose front end is formed into any shape.

For achieving the above-mentioned object, a disc cartridge according to the present invention comprises a disc-shaped storage medium, a cartridge body having a disc container for accommodating the disc-shaped storage medium therein, a recording and/or reproducing opening provided on the cartridge body for externally exposing part of a recording area of the disc-shaped storage medium ranging from an inner periphery to an outer periphery, a shutter member for opening and closing the recording and/or reproducing opening, and a shutter open/close mechanism having a guide groove for movably supporting the shutter member. The guide groove is provided obliquely with reference to a width direction of the cartridge body on a principal plane of the cartridge body.

The thus configured disc cartridge is provided with a guide groove obliquely with reference to a width direction of the cartridge body on the principal place of the cartridge body. It is possible to form the front end of the cartridge body to any shape in the insertion direction with reference to the recording and/or reproducing apparatus. A user can easily identify the insertion direction with reference to the recording and/or reproducing apparatus through the sense of sight and touch with the shape of the front end.

As mentioned above, a disc cartridge according to the present invention is provided with a guide groove obliquely with reference to a width direction of the cartridge body on the principal place of the cartridge body. It is possible to form the front end of the cartridge body to any shape in the insertion direction with reference to the recording and/or reproducing apparatus. A user can easily identify the insertion direction of the cartridge body with reference to the recording and/or reproducing apparatus. Accordingly, it is possible to prevent the cartridge body from being inserted into the recording and/or reproducing apparatus in an incorrect insertion direction.

Embodiments of the invention will now be described, by way of example only, with reference to the accompanying drawings in which:
FIG. 1. is a perspective view showing a conventional disc cartridge;
FIG. 2 is a perspective view showing a disc cartridge according to one example of the present invention;
FIG. 3 is a perspective view showing a disc cartridge according to one example of the present invention from its bottom side;
FIG.4 is a perspective view showing a disc cartridge according to one example of the present invention from its bottom side with a shutter plate moved to an open position;
FIG. 5 is an exploded perspective view showing a disc cartridge according to one example of the present invention from its bottom side for explaining a shutter plate thereof;
FIG. 6 is an exploded perspective view showing a disc cartridge according to one example of the present invention;
FIG. 7 is a longitudinal sectional view illustrating explaining the above-mentioned shutter plate and a recess for shutter movement;
FIG. 8 is a perspective view illustrating a shutter open/close mechanism:
FIG. 9 is a longitudinal sectional view illustrating a guide member of the above-mentioned shutter open/close mechanism;
FIG. 10 is a perspective view illustrating an open/close operation member of the above-mentioned shutter open/close mechanism;
FIG. 11 is a longitudinal sectional view showing the above-mentioned open/close operation member;
FIG. 12 is a top view illustrating a transmission member of the above-mentioned shutter open/close mechanism;
FIG. 13 is a top view illustrating an operation of the above-mentioned shutter open/close mechanism;
FIG. 14 is a top view showing the above-mentioned shutter open/close mechanism;
FIG. 15 is a perspective view showing another disc cartridge; and
FIG. 16 is a perspective view showing another optical disc.

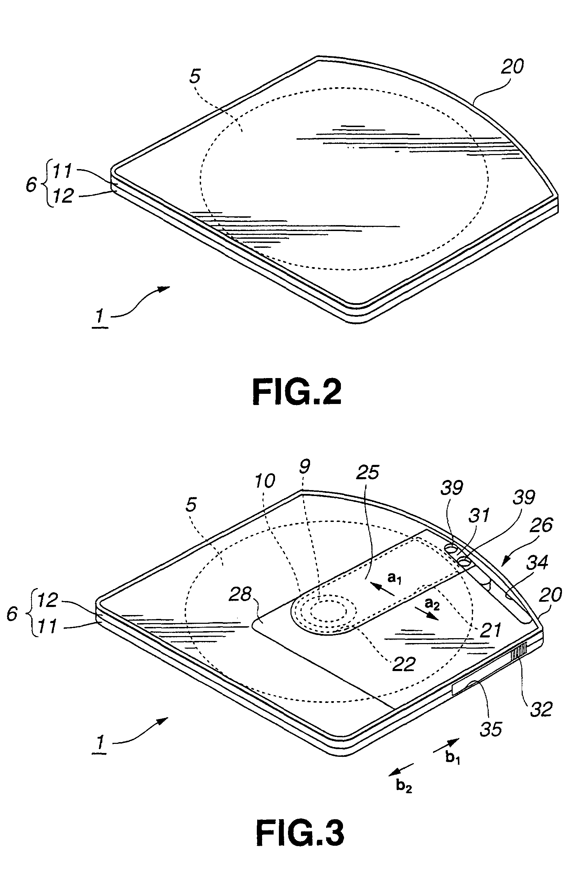

Embodiments of a disc cartridge according to the present invention will be described in further detail with reference to the accompanying drawings. As shown in FIGS. 2 and 3, a disc cartridge 1 comprises an optical disc 5 and a cartridge body 6 which accommodates this optical disc 5 rotatively.

As shown in FIGS. 2, 3, and 4, the optical disc 5 is formed as a disc having a center hole 9. For example, a write-once CD-R (Compact Disc-Recordable) is used for the optical disc 5. It is to be distinctly understood that the optical disc 5 may be a rewritable optical disc such as CD-W (Re Writable) and other optical discs such as a magneto-optical disc; and the like.

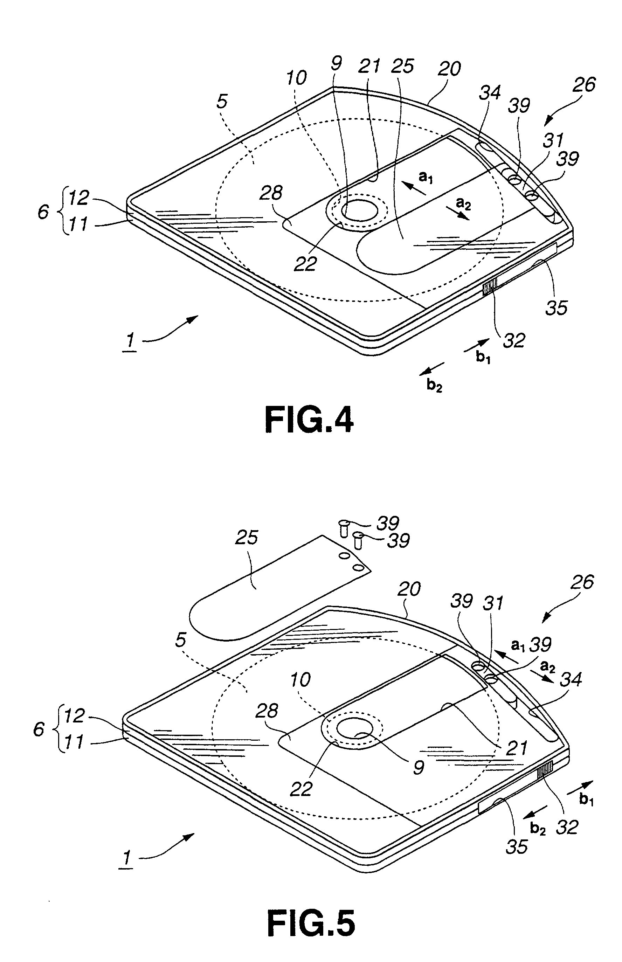

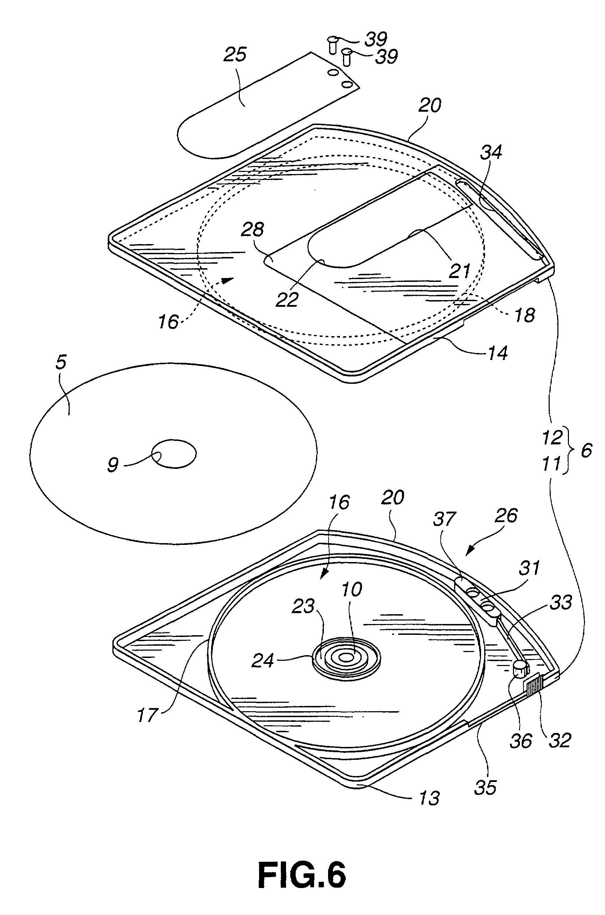

As shown in FIGS. 5 and 6, the cartridge body 6 comprises a set of an upper shell 11 and a lower shell 12 which are combined with each other. The upper shell 11 and the lower shell 12 are made of, say, a resin material such as polycarbonate and are approximately formed to a box by means of injection molding. In addition to the above-mentioned polycarbonate, the upper shell 11 and the lower shell 12 may be made of thermoplastic synthetic-resin materials such as polystyrene, high-impact polystyrene, acryl-styrol, acryl-butyl-styrol, polypropylene, modified PPO (polyphenylene-oxide), and the like.

As shown in FlG. 6, the upper shell 11 and the lower shell 12 are combined to each other to form outer walls 13 and 14 along an outer periphery. The outer walls 13 and 14 constitute a side face of the cartridge body 6.

As shown in FIG. 6, a circular disc container 16 is formed on inner faces of the upper shell 11 and the lower shell 12. The disc container 16 is slightly larger than the optical disc 5 with respect to its diameter and rotatively accommodates the optical disc 5. As shown in FIG. 6, the circular peripheral walls 17 and 18 are combined to each other on the inner faces of the upper shell 11 and the lower shell 12 to form the disc container 16. A height of the peripheral walls 17 and 18 each is almost same as the height of the outer walls 13 and 14 each on the upper shell 11 and the lower shell 12, respectively. Accordingly, this disc container 16 separates the optical disc 5 inward and outward by accommodating it with the peripheral walls 17 and 18.

With respect to the outer walls 13 and 14 of the upper shell 11 and the lower shell 12 as shown in FIGS. 2, 3, and 6, only a front face 20 is curved to form an approximate arc at the front end of the recording-reproducing apparatus in the insertion direction. A user can easily identify the insertion direction of the disc cartridge 1 with reference to the recording-reproducing apparatus through the sense of sight and touch with the shape of the front face 20. Accordingly, it is possible to prevent the disc cartridge 1 from being inserted into the recording and/or reproducing apparatus in an incorrect insertion direction. It may be preferable to form the front face 20 to a polyhedron, a combination of curved and flat surfaces, and the like.

As shown in FIG. 6, an approximately rectangular recording-reproducing opening 21 is formed on a principal plane of the lower shell 12. The recording-reproducing opening 21 is used for exposing the optical disc 5 to a recording-reproducing mechanism (not shown) of the recording-reproducing apparatus.

As shown in FIG. 6, a circular drive opening 22 is formed as part of the recording-reproducing opening 21 on the lower shell 12. The drive opening 22 is used for letting a disc table (not shown) of the disc drive mechanism on the recording-reproducing apparatus enter the cartridge body 6.

As shown in FIG. 6, there is provided a seating portion 23 surrounded by an annular peripheral wall 24 almost at the center of the lower shell 12's bottom. A chucking plate 10 is provided in the seating portion 23. The chucking plate 10 fits into the center hole 9 of the optical disc 5 for clamping the disc to the disc table of the recording-reproducing apparatus. The chucking plate 10 is made of a metal material having magnetic properties such as stainless steel and is almost formed to a disc. It may be preferable to use an iron material or to ensure corrosion protection by applying nickel or chrome plating or painting to the iron material.

The upper shell 11 and the lower shell 12 are combined to each other and are united by means of, say, ultrasonic bonding. It may be preferable to unite the upper shell 11 and the lower shell 12 by means of fixing screws. In this case, a bottom hole (not shown) is formed for screwing a fixing screw at a position, say, near a comer of the principal plane on one shell. A screw hole is formed on the other shell corresponding to the bottom hole.

As shown in FIGS. 3, 4, and 5, the cartridge body 6 is provided with a shutter plate 25 and a shutter open/close mechanism 26. The shutter plate 25 is movably provided in the directions of arrows a₁ and a₂ obliquely against the width direction of the cartridge body 6 and lets the recording-reproducing opening 21 and the drive opening 22 open and close. The shutter open/close mechanism 26 movably supports the shutter plate 25.

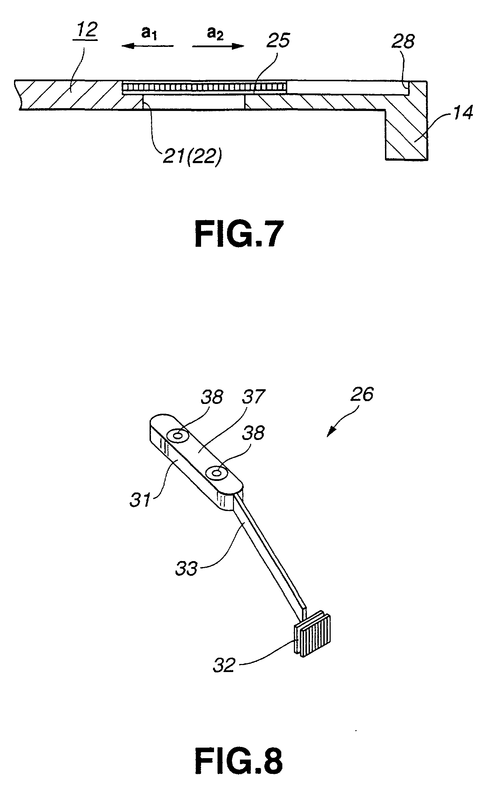

The shutter plate 25 is made of, say, a metal material such as aluminum and is formed to a flat plate with the thickness of, say, approximately 0.3 mm as shown in FIGS. 6 and 7. It may be preferable to ensure corrosion protection or decorative effect by applying anodized aluminum processing (anodization) or painting to an aluminum base material of the shutter plate 25. It may be also preferable to form the shutter plate 25 by punching a thin plate made of stainless steel or resin material such as polycarbonate, polystyrene, high-impact polystyrene, acryl-styrol, acryl-butyl-styrol, and the like. The shutter plate thickness is not limited to 0.3 mm and is selectable as needed according to materials to be used.

As shown in FIGS. 3, 6, and 7, the shutter plate 25 is slightly larger than an opening area comprising the recording-reproducing opening 21 and the drive opening 22. One end of the shutter plate 25 is mounted on the shutter open/close mechanism 26.

As shown in FIGS. 5, 6, and 7, an approximately square shutter travel recess 28 is provided on the principal plane of the lower shell 12 of the cartridge body 6. The shutter plate 25 is movably provided in the shutter travel recess 28. As shown in FIG. 7. the shutter travel recess 28 has a depth which is slightly larger than the thickness of the shutter plate 25 so that the shutter plate 25 does not protrude from the principal plane of the cartridge body 6.

The shutter open/close mechanism 26 comprises a guide member 31, an open/close operation member 32, a transmission member 33, a guide groove 34, a support block 35, and a guide protrusion 36. The guide member 31 supports the shutter plate 25. The open/close operation member 32 opens or closes the guide member 31. The transmission member 33 connects the guide member 31 with the open/close operation member 32 to transmit an open/close force. The guide groove 34 movably supports the guide member 31. The support block 35 movably supports the open/close operation member 32. The guide protrusion 36 restricts movement directions of the guide member 31 and the open/close operation member 32 which are moved by the transmission member 33.

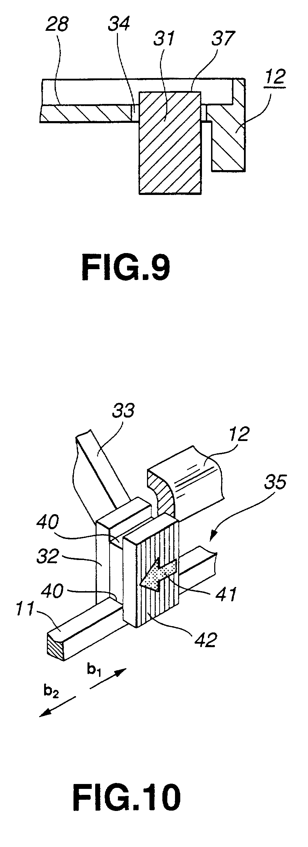

As shown in FIGS. 8 and 9, the guide member 31 is formed in a block made of a thermoplastic synthetic resin material such as polypropylene and the like. On one side of the guide member, there is formed a mount face for mounting the shutter plate 25. The mount face 37 ofthe guide member 31 is provided with screw holes 38. One end of the shutter plate 25 is fixed with fixing screws 39.

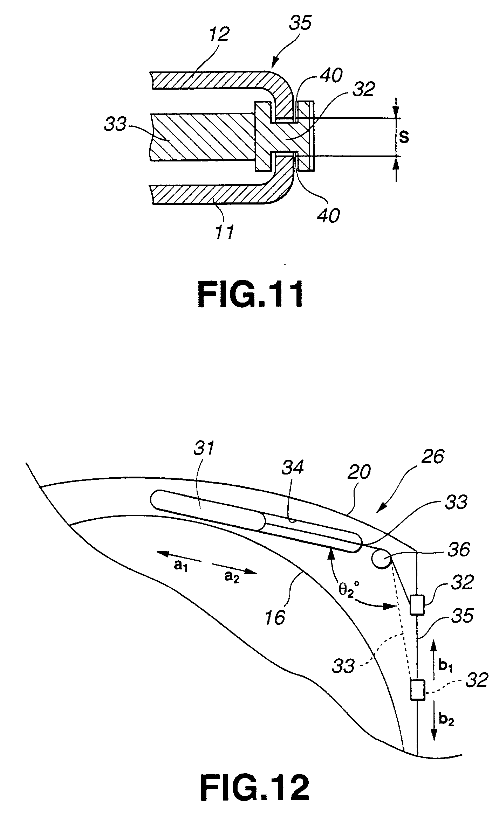

As shown in FIGS. 8 an 10, the open/close operation member 32 is formed in an approximately square block as an integral part of an end of the transmission member 33. As shown in FIG. 11, the open/close operation member 32 is provided with guide grooves 40 which rotatively guide the upper and lower shells 11 and 12. The open/close operation member 32 is arranged outward from the side of the cartridge body 6. The open/close operation member 32 is provided with an indication 41 such as an arrow to indicate a movement direction for releasing the shutter plate 25. For operations with a fingertip, a non-slip tongued and grooved face 42 is formed on an external surface of the open/close operation member 32.

As shown in FIG. 8, the transmission member 33 is made of an elastic material and is formed like a band. The transmission member 33 integrally connects the guide member 31 with the open/close operation member 32. Both ends of the transmission member 33 are connected to the guide member 31 and the open/close operation member 32 and function as hinges capable of elastic displacement.

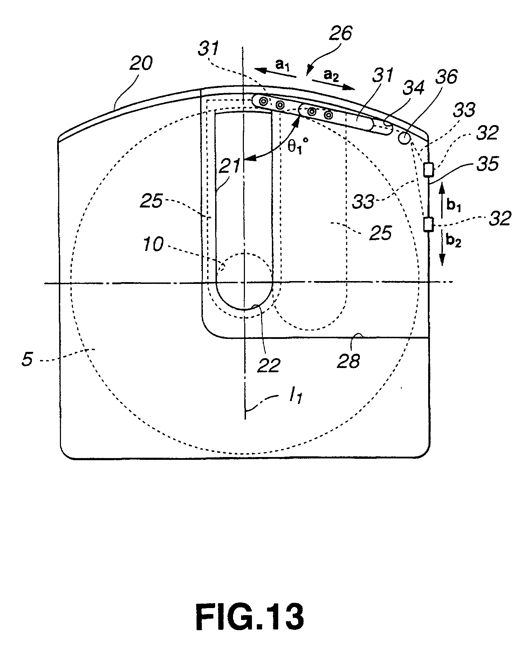

As shown in FIGS. 6 and 12, the guide groove 34 is formed adjacent to the front face 20 of the lower shell 12. The guide groove 34 forms a line obliquely against the cartridge body 6's width direction orthogonal to the insertion direction toward the recording-reproducing apparatus. As shown in FIG. 13, the guide groove 34 is obliquely formed at an oblique angle of θ₁ which is smaller than 90° against a center line l₁ in the width direction of the cartridge body 6. As shown in FIG. 9, one side of the guide member 31 movably fits into the guide groove 34 which slightly protrudes into the shutter travel recess 28 ofthe lower shell 12. The guide groove 34's length is so designed that it becomes a sum of the guide member 31's length in a longer direction and the shutter plate 25's movement. This movement is slightly greater than the width of the recording-reproducing opening 21 and the drive opening 22.

As shown in FIGS. 6, 10, and 11, the support block 35 is formed at either side of the upper shell 11 and lower shell 12 each parallel to the insertion direction. A
specified space s is formed between the upper shell 11 and the lower shell 12 for movably fitting into the guide groove 40 of the open/close operation member 32. As shown in FIG. 11, the open/close operation member 32 is so formed that a thickness formed between bottom faces ofthe guide grooves 40 is slightly smaller than the space s for the support block 35.

As shown in FIGS. 6 and 12, the guide protrusion 36 is planted on the upper shell 11 like a column. The guide protrusion 36 touches the transmission member 33 in the middle to movably supports the member. Since the guide protrusion 36 touches the transmission member 33 in the middle as shown in FIGS. 12 and 13. movement directions of the guide member 31 and the open/close operation member 32 each are restricted and guided with a bend angle θ₂ at which the transmission member 33 is bent. Because of this. it is possible to favorably move the guide member 31 and the open/close operation member 32 and stably maintain the shutter plate 25's movement.

As mentioned above, the shutter open/close mechanism 26 is positioned outside of the peripheral walls 17 and 18 on the disc container 16 and is placed in a space separated from the disc container 16. Even if the guide member 31, the open/close operation member 32. and the transmission member 33 slide to generate wear powder, it is prevented from entering the disc container 16, improving reliability for information recording and reproducing operations on the optical disc 5.

Regarding the thus configured disc cartridge 1, the following describes how the shutter open/close mechanism 26 uses the shutter plate 25 to open and close the recording-reproducing opening 21 and the drive opening 22 with reference to the accompanying drawings.

As shown in FIG. 3, the disc cartridge I is mounted in a cartridge mounting unit in the recording-reproducing apparatus with the recording-reproducing opening 21 and the drive opening 22 closed with the shutter plate 25.

When the disc cartridge 1 is mounted in the cartridge mounting unit, a shutter open/close member (not shown) on the recording-reproducing apparatus moves the open/close operation member 32 of the shutter open/close mechanism 26 in the direction of the arrow b₂. With respect to the shutter open/close mechanism 26 as shown in FIGS. 3, 4, and 13, the open/close operation member 32 moves in the direction of the arrow b₂ to move the transmission member 33 in the longer direction. This also moves the guide member 31 along the guide groove 34 in the direction of the arrow a₂. When the guide member 31 moves in the direction of the arrow a₂, the shutter plate 25 moves in the direction of the arrow a₂ to open the recording-reproducing opening 21 and the drive opening 22.

The disc drive mechanism's disc table (not shown) on the recording-reproducing apparatus enters the disc cartridge 1 through the drive opening 22 to rotatively drive the optical disc 5. An optical pickup also enters the disc cartridge 1 through the recording-reproducing opening 21 for performing information recording and reproduction on the optical disc 5.

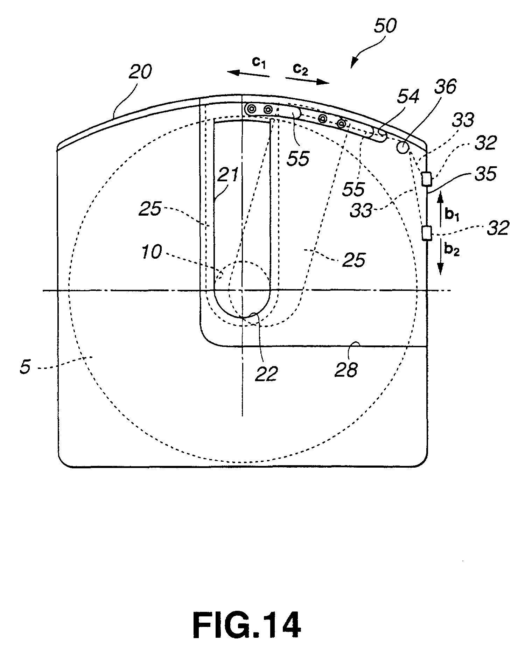

The above-mentioned shutter open/close mechanism 26 is configured to have the linear guide groove 34 and the parallel moving shutter plate 25. The following briefly describes a configuration in which the guide groove 54 is formed to an approximate arc and the shutter plate 25 rotates, say, as shown in FIG. 14. For convenience's sake, FIG. 14 uses same numerals as those of the corresponding members for the above-mentioned shutter open/close mechanism 26. Explanation of these members is omitted.

As shown in FIG. 14. the shutter open/close mechanism 50 is so configured that the guide member 55 is provided in the approximate arc guide groove 54 movably in the directions of arrows c₁ and c₂. With this shutter open/close mechanism 50 as shown in FIG. 14, the shutter plate 25, when moved to the open position, partially covers the recording-reproducing opening 21 and the drive opening 22. These openings cannot be opened reliably. Accordingly, the guide groove 54 of the shutter open/close mechanism 50 needs to be formed linearly for reliably opening and closing the recording-reproducing opening 21 and the drive opening 22.

As mentioned above the disc cartridge 1's front face 20 is curved in the insertion direction against the recording-reproducing apparatus. It is possible to easily identify the insertion direction against the recording-reproducing apparatus through the sense of sight and touch. Accordingly, it is possible to prevent the disc cartridge 1 from being inserted into the recording-reproducing apparatus in an incorrect insertion direction.

According to this disc cartridge 1, the cartridge body 6's principal plane is provided with the guide groove 34 for rotatively supporting the shutter plate 25. It is possible to increase the freedom to design a front end shape in the insertion direction against the recording-reproducing apparatus.

The disc cartridge 1 is provided with the shutter open/close mechanism 26 for movably supporting the shutter plate 25. This shutter open/close mechanism 26 is placed outside the disc container 16. If the shutter open/close mechanism 26 generates powder due to sliding, it is possible to prevent the powder from entering the disc container 16 and to prevent the powder from adhering to the optical disc 5. Consequently, this disc cartridge 1 can improve reliability for information recording and reproducing operations on the optical disc 5.

According to this disc cartridge 1, the guide member 31 of the shutter open/close mechanism 26 touches the end of the guide groove 34. This restricts a movement range when the shutter plate 25 opens and closes, thus preventing the shutter plate 25 from touching the cartridge body 6. Accordingly, this disc cartridge 1 can prevent wear powder from being generated by touching of the shutter plate 25 on the cartridge body 6 and can prevent the wear powder from adhering to the optical disc 5. Consequently, this disc cartridge 1 can improve reliability for information recording and reproducing operations on the optical disc 5.

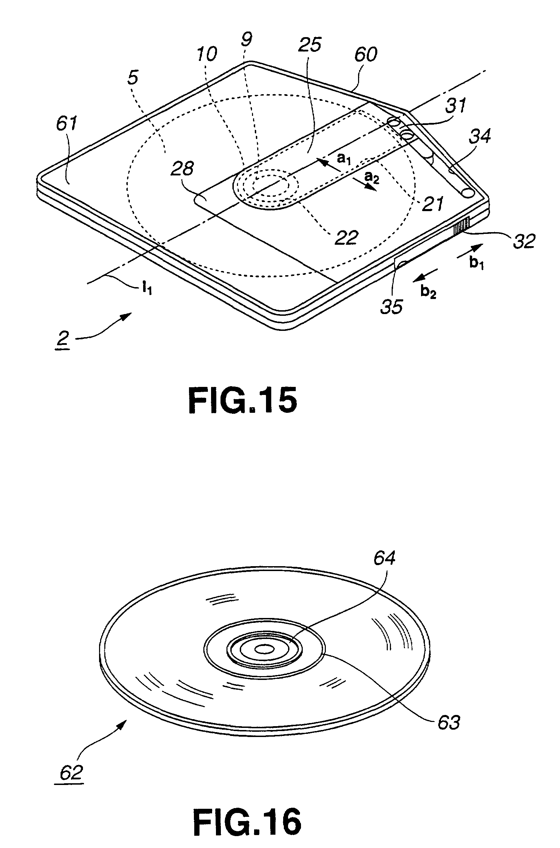

The above-mentioned disc cartridge 1 has the curved front face 20 against the recording-reproducing apparatus. However, it is to be distinctly understood that the front face can be formed in another shape as shown in FIG. 15. The following briefly describes a differently shaped disc cartridge with reference to the accompanying drawings. For convenience's sake, FIG. 15 uses same numerals as those of the corresponding members and locations for the above-mentioned disc cartridge 1. Explanation of these members and locations is omitted.

With respect to another disc cartridge 2 in FIG. 15, only the front face 60 of the cartridge body 61 is approximately V-shaped. This shape forms a line symmetry against the center line l₁ along the width direction ofthe cartridge body 61. The center line is parallel to the insertion direction toward the recording-reproducing apparatus. Accordingly, the disc cartridge 2 makes it possible to easily identify the insertion direction against the recording-reproducing apparatus through the sense of sight and touch.

According to the above-mentioned disc cartridge 1 or 2, the front face 20 or 60 is symmetrically formed to a curved and/or polyhedral face with reference to the center line l₁ along the width direction of the cartridge body 6 or 61. It may be preferable to form the front face asymmetrically.

According to the above-mentioned disc cartridge I or 2, the cartridge body 6 or 61 is provided with the peripheral wall 24 to form the seating portion 23 which accommodates the chucking plate 10 for holding the optical disc 5. As shown in FIG. 16, for example, it may be preferable to attach the chucking plate 64 provided with the annular peripheral wall 63 to the center hole 9 of the optical disc 62.

The above-mentioned disc cartridge 1 or 2 is configured to let an optical pickup enter through the recording-reproducing opening 21. For example, it may be preferable to provide another recording-reproducing opening for allowing a magnetic head and the like to enter through and another shutter plate for opening or closing this recording-reproducing opening at a position opposite the recording-reproducing opening 21.

## Claims

1. A disk cartridge comprising:
a disk-shaped recording medium;
a cartridge body having a disk container for accommodating said disk-shaped recording medium therein;
a recording and/or reproducing opening provided on said cartridge body for externally exposing part of a recording area of said disk-shaped recording medium ranging from an inner periphery to an outer periphery;
a shutter member for opening and closing said recording and/or reproducing opening; and
a shutter open/close mechanism having a guide groove for movably supporting said shutter member,
wherein said guide groove is provided obliquely with reference to a width direction of said cartridge body on a principal plane of said cartridge body.

2. The disk cartridge according to claim 1, wherein said cartridge body has sides at a front end formed to a curved and/or polyhedral face in an insertion direction against a recording and/or reproducing apparatus.

3. The disk cartridge according to claim 1, wherein said shutter member is provided outside said cartridge body; and
said shutter open/close mechanism is provided in a space of said cartridge body outside a peripheral wall of said disc container, supports said shutter member, and has a guide member movably fitted to said guide groove.

4. The disc cartridge according to claim 1, wherein said shutter open/close mechanism comprises
an operation member for moving said guide member,
a transmission member made of an elastic material for integrally connecting said guide member with said operation member and transmitting an operation force of said operation member to said guide member,
a guide protrusion touching said transmission member for restricting movement directions of said guide member and said operation member, and
a support block provided on said cartridge body for movably supporting said operation member.

5. The disc cartridge according to claim 1, wherein said shutter member restricts a movement range for opening and closing said recording and/or reproducing opening in response to touching of said guide member on an end in said guide groove.

6. The disc cartridge according to claim 4, wherein said support block is provided at either side of said cartridge body in a width direction.

7. The disc cartridge according to claim 1, wherein said cartridge body has a drive opening formed as part of said recording and/or reproducing opening for allowing disk drive means for rotatively driving said disk-shaped recording medium to enter through; and
said shutter member is provided for opening and closing said recording and/or reproducing opening and said drive opening.

8. The disk cartridge according to claim 1, wherein said shutter member is provided so as to allow parallel displacement in an oblique direction with reference to a width direction of said cartridge body.
